# FASCICULE DE BREVET EUROPEEN

(11) **EP 3 375 075 B1**
(45) Date de publication et mention de la délivrance du brevet: **27.10.2021**
(21) Numéro de dépôt: 16797784.2
(22) Date de dépôt: 07.11.2016
(51) Int. Cl.: H02K 7/00, H02K 15/16, H02K 7/116, F16D 1/10, F16D 1/08

(54) **ENSEMBLE ÉLECTROMÉCANIQUE COMPORTANT UNE MACHINE ÉLECTRIQUE ACCOUPLÉE À UN RÉDUCTEUR**
ELEKTROMECHANISCHE BAUGRUPPE MIT EINER AN EIN UNTERSETZUNGSGETRIEBE GEKOPPELTEN ELEKTRISCHEN MASCHINE
ELECTROMECHANICAL ASSEMBLY COMPRISING AN ELECTRIC MACHINE COUPLED TO A REDUCING GEAR

(30) Priorité: 12.11.2015 FR 1560788
(43) Date de publication de la demande: 19.09.2018
(73) Titulaire: Moteurs Leroy-Somer, 16915 Angouleme Cedex 9 (FR)
(72) Inventeur: CALMETTES, Didier, 16400 Puymoyen (FR); PONT, Pascal, 16430 Champniers (FR); NOIREAU, Stéphane, 16440 Mouthiers Sur Boheme (FR)
(74) Mandataire: Nony
(86) Numéro de dépôt international: PCT/EP2016/076870
(87) Numéro de publication internationale: WO 2017/080961

(56) Documents cités:
- EP-A1- 1 508 710
- WO-A1-2005/054699
- CN-A- 104 716 777
- DE-A1-102008 064 267
- FR-A5- 2 178 431
- US-A- 1 803 995
- US-A- 2 317 070
- US-A- 4 668 116
- US-A- 5 213 437
- US-A1- 2002 131 844
- US-A1- 2005 006 967
- US-A1- 2013 343 933
- US-A1- 2015 082 929
- US-B2- 7 874 760
- US-B2- 8 393 798

## Description

La présente invention concerne les ensembles électromécaniques comportant une machine électrique et un réducteur, et plus particulièrement mais non exclusivement ceux dans lesquels la machine électrique est un moteur, notamment un moteur de traction automobile.

Il est connu d'assembler un moteur électrique et un réducteur au moyen d'une liaison cannelée, l'un des arbres étant un arbre mâle et l'autre un arbre femelle, lequel est typiquement un arbre ayant une partie d'extrémité creuse dans laquelle est frettée une douille.

CN 104 716 777 concerne un moteur à structure intégrée pour un véhicule électrique, comportant un moteur et une boîte de réduction à assembler. Dans l'art antérieur décrit dans ce document, l'arbre mâle du moteur vient coopérer avec l'arbre femelle du réducteur et une vis permet la fixation du carter du moteur à celui du réducteur.

On connaît de US 2 317 070 un exemple de liaison arbre-moyeu qui comporte des portions d'entraînement à cannelures droites complémentaires coopérant entre elles.

Afin de permettre l'assemblage des arbres, il est connu de laisser un jeu au niveau des cannelures, qui est source d'usure et de bruit. Le moteur peut ne comporter qu'un seul roulement à l'arrière, l'arbre du moteur étant guidé à l'avant par l'arbre du réducteur, lequel peut être supporté par deux roulements.

Les cannelures de l'arbre mâle sont généralement taillées directement dans celui-ci tandis que celles de l'arbre femelle sont usinées dans la douille.

Pour réduire la tendance des cannelures à se désaligner en fonctionnement sous l'effet de la force radiale liée aux forces magnétiques de la machine électrique et à générer une usure par corrosion de contact, il est connu d'ajouter une portée de centrage entre l'arbre mâle et l'arbre femelle en avant des cannelures. Le jeu classiquement présent pour le montage des arbres au niveau de la portée de centrage est de l'ordre de 5 à 35 µm, ce qui permet un déplacement angulaire de désalignement de l'ordre de 0,06° à 0,4°. Ce déplacement entraîne une usure des cannelures qui constitue une source de bruit et d'usure impactant négativement la durée de vie de l'ensemble.

Afin d'amortir le déplacement entre les arbres mâles et femelles, il est connu par les publications US 3 686 895 et CN 102644636 d'interposer radialement des éléments amortisseurs tels que des joints toriques au niveau des cannelures, ou au niveau d'une portée cylindrique de centrage.

Dans une autre réalisation connue, et toujours dans une hypothèse de cinématique d'usure des cannelures liée au jeu nécessaire au montage des cannelures, le réducteur est équipé d'un arbre monté sur deux roulements tandis que le moteur ne comporte qu'un seul roulement à l'arrière, sans aucun flasque ni roulement à l'avant. Dans cette configuration, l'accouplement est réalisé par des cannelures réalisées dans une douille femelle frettée dans l'arbre moteur et des cannelures taillées sur l'arbre mâle du réducteur nécessitant également une portée de centrage.

Le moteur n'ayant qu'un roulement à l'arrière, le rotor à aimants exerce une force radiale qui va générer un désalignement des cannelures entraînant en fonctionnement une usure par corrosion de contact.

Pour fonctionner sans bruit, les arbres des moteur et réducteur doivent tourner avec des défauts de co-axialité et de concentricité les plus faibles possibles. Le jeu radial au niveau de la portée de centrage qui permet un déplacement angulaire entraîne une usure des cannelures par phénomène dit de *"fretting corrosion"* (qui peut se traduire en français par « corrosion de contact ») ne permettant pas d'assurer la durée de vie attendue.

Une solution connue consiste à concevoir un moteur avec deux paliers qui sera accouplé à un réducteur avec deux paliers. Les arbres réducteur et moteur comportent à leurs extrémités des cannelures. La liaison entre les arbres est réalisée par l'intermédiaire d'un manchon cannelé femelle. Ce montage nécessite un positionnement rigoureux des deux carters, qui est réalisé par exemple par un piétage, ce qui se répercute sur le coût et peut engendrer des contraintes d'installation.

L'invention vise à réduire le bruit de fonctionnement d'une machine électrique réductée sans pour autant complexifier outre mesure la machine ni accroître les difficultés d'assemblage du moteur et du réducteur ou d'implantation de celle-ci dans son environnement d'utilisation.

Elle y parvient grâce à un ensemble électromécanique selon la revendication 1.

Grâce à l'invention, on peut d'abord emboîter les arbres, puis ensuite fixer entre eux les carters, dans la position prise par ceux-ci lors de l'emboîtement des arbres.

On réalise les reliefs de centrage avec un jeu nul, ce qui limite le bruit. De plus, l'ensemble selon l'invention comporte uniquement des moyens de fixation tels que des vis, boulons, pour la fixation des carters l'un sur l'autre, sans avoir à réaliser sur les carters des reliefs de positionnement précis d'un carter par rapport à l'autre.

Les reliefs de centrage sont des cannelures.

Ces cannelures peuvent présenter une géométrie permettant de réaliser le centrage de l'emboîtement entre les arbres par les flancs. Les profils des cannelures d'un arbre sont avantageusement réalisés de manière à être en contact avec les cannelures de l'autre arbre, une fois les arbres emboîtés, sans jeu.

L'un de la machine électrique et du réducteur peut comporter un arbre mâle et l'autre un arbre femelle. Les reliefs de centrage de l'arbre femelle peuvent être réalisés dans une douille rapportée dans l'arbre femelle. L'arbre femelle peut être celui de la machine électrique.

La machine électrique peut être un moteur, pouvant avoir une vitesse de rotation comprise entre 1 000 et 18 000 tr/min.

Le moteur peut être un moteur de traction automobile.

L'invention porte également sur un procédé de fixation d'un ensemble électromécanique comme décrit ci-dessus, le procédé comprenant les étapes suivantes :
- emboîter les arbres de la machine électrique et du réducteur par les reliefs de centrage jusqu'à amener les carters en contact l'un de l'autre,
- fixer les carters entre eux par les moyens de fixation dans la position qu'ils ont prise à l'étape précédente d'emboîtement,

L'invention pourra être mieux comprise à la lecture du dessin ci-annexé, illustrant un mode de réalisation détaillé, dans lequel :
- la figure 1 représente de manière schématique, partielle et en coupe axiale un ensemble électromécanique selon l'invention,
- la figure 2 représente de manière schématique, partielle et en coupe transversale, l'emboîtement entre deux reliefs respectivement de l'arbre du réducteur et de l'arbre de la machine électrique,
- la figure 3 représente de manière schématique et isolée, pour partie en perspective et pour partie en coupe axiale, la machine électrique de l'ensemble électromécanique de la figure 1, et
- les figures 4 à 6 illustrent les différentes étapes du procédé d'assemblage et de fixation de l'ensemble électromécanique selon l'invention.

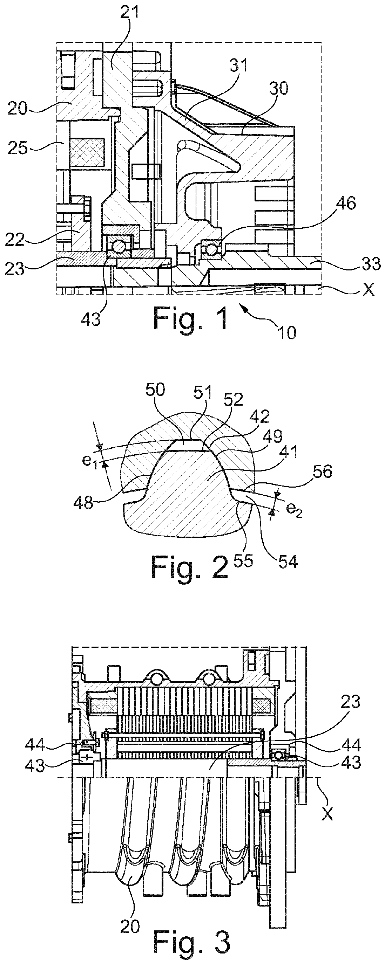

L'ensemble 10 représenté sur la figure 1 comporte une machine électrique 20 et un réducteur 30 accouplé à la machine 20. La machine 20 et le réducteur 30 comportent des carters respectifs 21 et 31, qui sont assemblés et fixés ensemble. La machine 20 est, dans l'exemple considéré, un moteur électrique et comporte un rotor 22 dont l'arbre 23 tourne en rotation autour d'un axe X. Le rotor 22 est interne à un stator 25. La machine 20 peut être un moteur à aimants permanents. L'arbre 23 est supporté par deux roulements 43, portés par des flasques 44 de la machine 20.

Le réducteur 30, visible sur la figure 1, comporte un arbre d'entrée 33 qui est guidé à l'avant et à l'arrière par des roulements respectifs dont un roulement 46 est visible sur la figure 1.

Dans l'exemple illustré, tous les roulements sont à billes mais il peut en être autrement sans sortir du cadre de l'invention. En particulier, les roulements peuvent être à rouleaux, coniques ou non, à aiguilles ou autres.

Une liaison mécanique, représentée plus particulièrement sur les figures 2 et 3, assure la transmission du couple entre les arbres 23 et 33. Chaque arbre 23 ou 33 comporte des reliefs de centrage réalisés de telle sorte qu'un emboîtement des arbres 23 et 33 se fasse sans jeu. Les carters 21 et 31 sont fixés entre eux par les moyens de fixation 35 dans la position imposée par l'emboîtement des arbres. Les moyens de fixation 35 sont composés, dans l'exemple illustré, par des vis et/ou écrous et boulons ou autres moyens de fixation du même type.

Dans l'exemple illustré, l'arbre 23 de la machine électrique 20 est un arbre femelle dans lequel une douille 40 a été frettée, la douille 40 comportant intérieurement les reliefs de centrage 42 consistant en des cannelures femelles.

L'arbre mâle est constitué par l'arbre 33 du réducteur 30 présentant à son extrémité 34 les reliefs de centrage 41 consistant, dans l'exemple illustré, en des cannelures mâles s'étendant selon l'axe X.

Une cannelure mâle 41 emboîtée avec une cannelure femelle 42 a été représentée sur la figure 2.

Comme visible sur cette figure, le centrage entre les arbres 23 et 33 a lieu par les flancs 48 et 49 des cannelures 41 et 42. Aucun jeu n'est prévu entre les cannelures, comme visible, de telle sorte que l'usure et le bruit liés au jeu peuvent être évités. Il est à noter qu'un espace 50 est en revanche prévu entre la base 51 de la cannelure femelle 42 et l'extrémité 52 de la cannelure mâle 41, d'une largeur e₁ la plus petite possible pour permettre d'assurer, quelles que soient les tolérances de fabrication, qu'un jeu entre les cannelures est nul. De même, un espace 54 est prévu entre la base 55 de la cannelure mâle 41 et l'extrémité 56 de la cannelure femelle 42, d'une largeur e₂ la plus petite possible permettre d'assurer, quelles que soient les tolérances de fabrication, qu'un jeu entre les cannelures est nul.

Ainsi, grâce à l'invention et à la présence des deux roulements au moteur, on peut réaliser un emboîtement sans jeu entre les arbres 23 et 33 et permettre par cet emboîtement le positionnement correct des carters 31 et 21 entre eux puis leur fixation dans cette même position à l'aide des moyens de fixation, sans autre élément de liaison.

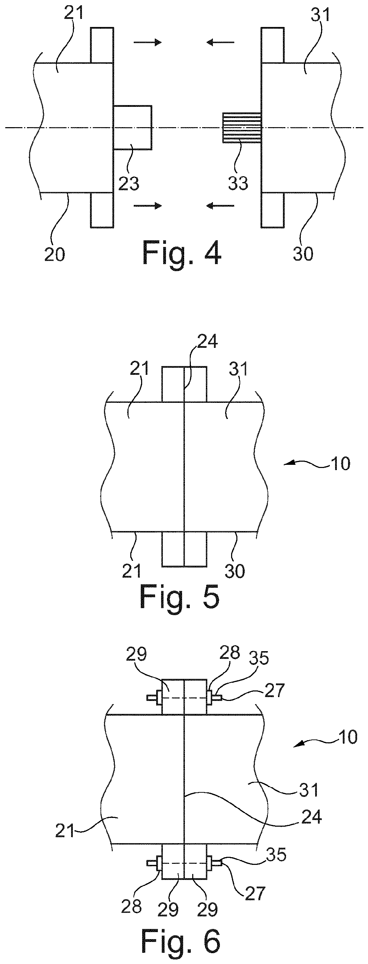

On a représenté sur les figures 4 à 6 le procédé de fixation de l'ensemble électromécanique 10.

La première étape illustrée sur la figure 4 consiste à rapprocher la machine 20 et le réducteur 30 de manière à permettre l'emboîtement de l'arbre 33 du réducteur 30 et de l'arbre 23 de la machine 20.

Dans la deuxième étape comme illustré sur la figure 5, on serre les carters 21 et 31 de manière à les amener en contact selon une surface de contact 24. On ne modifie pas le positionnement ou l'orientation des carters 21 et 31 entre eux.

Enfin, toujours dans la position prise par les carters 21 et 31 lors de l'emboîtement des arbres 23 et 33 à la première étape, on fixe les carters 21 et 31 entre eux, comme illustré sur la figure 6, à l'aide des moyens de fixation 35 formés, dans cet exemple, de tiges filetées 27 et boulons 28 à travers des brides 29.

L'invention n'est pas limitée à l'exemple qui vient d'être décrit.

L'arbre femelle de la machine électrique peut être remplacé par un arbre mâle et inversement.

Un élément intermédiaire, tel qu'un joint, peut être interposé entre les carters sans sortir du cadre de l'invention.

Les roulements ou certains roulements peuvent être remplacés par des paliers lisses sans sortir du cadre de l'invention.

## Revendications

1. Ensemble électromécanique (10) comportant une machine électrique (20) accouplée à un réducteur (30),
la machine électrique (20) comportant deux paliers ou roulements (43),
le réducteur (30) comportant deux paliers ou roulements (46),
le réducteur (30) et la machine électrique (20) comprenant chacun un carter (31 ; 21) comportant des moyens de fixation (35) à l'autre carter (21 ; 31),
la machine électrique (20) et le réducteur (30) comportant chacun un arbre (23 ; 33) engagé dans l'autre, chaque arbre (23 ; 33) comportant des reliefs de centrage (41, 42) réalisés de telle sorte qu'un emboîtement des arbres (23, 33) entre eux crée un centrage de manière à ce que les carters (21, 31) soient positionnés correctement pour leur fixation à l'aide des moyens de fixation (35) dans la position imposée par l'emboîtement des arbres sans avoir à réaliser sur les carters des reliefs de positionnement précis d'un carter par rapport à l'autre,
les reliefs de centrage étant réalisés de telle sorte que l'emboîtement des arbres (23, 33) se fasse sans jeu, les reliefs de centrage (41, 42) étant des cannelures, les profils des cannelures d'un arbre (23 ; 33) étant réalisés de manière à être en contact avec les cannelures de l'autre arbre (33 ; 23), une fois les arbres (23, 33) emboîtés, sans jeu.

2. Ensemble selon la revendication 1, comportant uniquement les moyens de fixation (35) tels que des vis, boulons, pour la fixation des carters (21, 31) l'un sur l'autre.

3. Ensemble selon l'une quelconque des revendications précédentes, dans lequel les cannelures présentent une géométrie permettant de réaliser le centrage de l'emboîtement entre les arbres (23, 33) par les flancs (48, 49).

4. Ensemble selon l'une quelconque des revendications précédentes, dans lequel l'un de la machine électrique (20) et du réducteur (30) comporte un arbre (33) mâle et l'autre un arbre (23) femelle.

5. Ensemble selon la revendication précédente, les reliefs de centrage (41) de l'arbre (23) femelle étant réalisés dans une douille (40) rapportée dans l'arbre (23) femelle.

6. Ensemble selon l'une quelconque des revendications 4 et 5, dans lequel l'arbre (23) femelle est celui de la machine électrique (20).

7. Ensemble selon l'une quelconque des revendications précédentes, dans lequel la machine électrique (20) est un moteur, avec une vitesse de rotation comprise entre 1 000 et 18 000 tr/min.

8. Ensemble selon la revendication précédente, le moteur étant un moteur de traction automobile.

9. Procédé de fixation d'un ensemble électromécanique (10) selon l'une quelconque des revendications 1 à 6, le procédé comprenant les étapes suivantes :
- emboîter les arbres (23, 33) de la machine électrique (20) et du réducteur (30) par les reliefs de centrage (41, 42) jusqu'à amener les carters en contact l'un de l'autre,
- fixer les carters (21, 31) entre eux par les moyens de fixation dans la position qu'ils ont prise à l'étape précédente d'emboîtement.

## Patentansprüche

1. Elektromechanische Baugruppe (10), die eine an ein Getriebe (30) gekoppelte elektrische Maschine (20) beinhaltet,
wobei die elektrische Maschine (20) zwei Lager oder Wälzlager (43) beinhaltet,
wobei das Getriebe (30) zwei Lager oder Wälzlager (46) beinhaltet,
wobei das Getriebe (30) und die elektrische Maschine (20) jeweils ein Gehäuse (31; 21) umfassen, das Mittel zur Befestigung (35) am anderen Gehäuse (21; 31) beinhaltet,
wobei die elektrische Maschine (20) und das Getriebe (30) jeweils eine Welle (23; 33) beinhalten, die in die andere eingesetzt ist, wobei jede Welle (23; 33) Zentriererhebungen (41, 42) beinhaltet, die so ausgeführt sind, dass ein Zusammenstecken der Wellen (23, 33) eine Zentrierung bewirkt, so dass die Gehäuse (21, 31) zu ihrer Befestigung mit Hilfe der Befestigungsmittel (35) in der durch das Stecken der Wellen vorgegebenen Position richtig positioniert sind, ohne an den Gehäusen Erhebungen zur präzisen Positionierung eines Gehäuses in Bezug auf das andere ausführen zu müssen,
wobei die Zentriererhebungen derart ausgeführt sind, dass das Stecken der Wellen (23, 33) spielfrei erfolgt, wobei die Zentriererhebungen (41, 42) Passverzahnungen sind, wobei die Profile der Passverzahnungen einer Welle (23; 33) so ausgeführt sind, dass sie mit den Passverzahnungen der anderen Welle (33; 23) in Kontakt stehen, sobald die Wellen (23, 33) spielfrei gesteckt sind.

2. Baugruppe nach Anspruch 1, die nur Befestigungsmittel (35) wie Schrauben, Bolzen zur Befestigung der Gehäuse (21, 31) aneinander beinhaltet.

3. Baugruppe nach einem der vorhergehenden Ansprüche, wobei die Passverzahnungen eine Geometrie aufweisen, die es ermöglicht, die Zentrierung des Zusammensteckens der Wellen (23, 33) über die Flanken (48, 49) auszuführen.

4. Baugruppe nach einem der vorhergehenden Ansprüche, wobei die bzw. das eine der elektrischen Maschine (20) und des Getriebes (30) eine Steckwelle (33) und die bzw. das andere eine Aufnahmewelle (23) beinhaltet.

5. Baugruppe nach dem vorhergehenden Anspruch, wobei die Zentriererhebungen (41) der Aufnahmewelle (23) in einer Hülse (40) ausgeführt sind, die in die Aufnahmewelle (23) eingesetzt ist.

6. Baugruppe nach einem der Ansprüche 4 und 5, wobei die Aufnahmewelle (23) die der elektrischen Maschine (20) ist.

7. Baugruppe nach einem der vorhergehenden Ansprüche, wobei die elektrische Maschine (20) ein Motor mit einer Drehzahl zwischen 1.000 und 18.000 U/min ist.

8. Baugruppe nach dem vorhergehenden Anspruch, wobei der Motor ein Kraftfahrzeug-Fahrmotor ist.

9. Verfahren zur Befestigung einer elektromechanischen Baugruppe (10) nach einem der Ansprüche 1 bis 6, wobei das Verfahren die folgenden Schritte umfasst:
- Stecken der Wellen (23, 33) der elektrischen Maschine (20) und des Getriebes (30) über die Zentriererhebungen (41, 42), bis die Gehäuse in Kontakt miteinander gebracht sind,
- Befestigen der Gehäuse (21, 31) untereinander mit den Befestigungsmitteln in der Position, die sie im vorhergehenden Schritt des Steckens eingenommen haben.

## Claims

1. An electromechanical assembly (10) comprising an electric machine (20) coupled to a reducing gear (30),
the electric machine (20) comprising two bearings or rolling bearings (43),
the reducing gear (30) comprising two bearings or rolling bearings (46),
the reducing gear (30) and the electric machine (20) each comprising a casing (31; 21) comprising means (35) for fixing to the other casing (21; 31),
the electric machine (20) and the reducing gear (30) each comprising a shaft (23; 33) engaged in the other, each shaft (23; 33) comprising centering protrusions (41, 42) produced in such a way that fitting the shafts (23, 33) together has a centering effect so that the casings (21, 31) are positioned correctly for the fixing thereof using the fixing means (35) in the position taken by the fitting of the shafts without having to produce, on the casings, protrusions for precise positioning of one casing relative to the other,
the centering protrusions being produced in such a way that the shafts (23; 33) are fitted together without clearance, the centering protrusions (41, 42) being splines, the profiles of the splines of a shaft (23; 33) being produced in such a way as to be in contact with the splines of the other shaft (33; 23), once the shafts (23; 33) are fitted together, without clearance.

2. The assembly as claimed in claim 1, comprising only the fixing means (35) such as screws, bolts, for fixing the casings (21, 31) one on the other.

3. The assembly as claimed in any one of the preceding claims, wherein the splines have a geometry making it possible to center the fitting between the shafts (23, 33) via the sides (48, 49).

4. The assembly as claimed in any one of the preceding claims, wherein either the electric machine (20) or the reducing gear (30) comprises a male shaft (33) and the other a female shaft (23).

5. The assembly as claimed in the preceding claim, the centering protrusions (41) of the female shaft (23) being produced in a bushing (40) attached in the female shaft (23).

6. The assembly as claimed in any one of claims 4 and 5, wherein the female shaft (23) is the shaft of the electric machine (20).

7. The assembly as claimed any one of the preceding claims, wherein the electric machine (20) is a motor, with a rotational speed between 1000 and 18000 rpm.

8. The assembly as claimed in the preceding claim, the motor being a car drive motor.

9. A method of fixing an electromechanical assembly (10) as claimed in any one of claims 1 to 6, the method comprising the following steps:
- fitting together the shafts (23, 33) of the electric machine (20) and of the reducing gear (30) via the centering protrusions (41, 42) until bringing the casings into contact with each other,
- fixing the casings (21, 31) together via the fixing means in the position that they have taken in the preceding fitting step.
